# EUROPEAN PATENT APPLICATION

(11) **EP 2 856 967 A1**
(43) Date of publication of application: **08.04.2015**
(21) Application number: 13796892.1
(22) Date of filing: 30.05.2013
(51) Int. Cl.: A61C 8/00

(54) **DENTAL IMPLANT**

(30) Priority: 30.05.2012 JP 2012123698
(71) Applicant: Kyocera Medical Corporation, Osaka-shi, Osaka 532-0003 (JP)
(72) Inventor: NAKANO, Yuji, Osaka-shi Osaka 532-0003 (JP); ISHIDA, Noriyuki, Osaka-shi Osaka 532-0003 (JP)
(74) Representative: Viering, Jentschura & Partner Patent- und Rechtsanwälte
(86) International application number: PCT/JP2013/065087
(87) International publication number: WO 2013/180237

(57) **Abstract**

The invention relates to a dental implant which can prevent peri-implantitis and in which an affinity of a jawbone embedded portion embedded into the jawbone with the jawbone is not degraded. In a dental implant (10), at least a region (12a) of a gingiva contacting portion (12) which is in contact with gingiva (D), is antibacterially treated, and an arithmetic average roughness Ra of an outer surface of the region (12a) is set to 2 µm or less. At least the region (12a) of the gingiva contacting portion (12) has antibacterial properties, and becomes such a surface texture that bacteria are less prone to attach to and stay in the region, and the region is prone to be in close contact with the gingiva (D).

## Description

### Technical Field

The present invention relates to a dental implant that is embedded into the jawbone so as to fix a dental prosthesis such as artificial teeth inside the oral cavity.

### Background Art

An implant surgery is performed in which when a tooth is lost, a dental implant is embedded into the jawbone and a dental prosthesis is fixed to the dental implant so as to compensate for the function of the lost tooth.

Peri-implantitis, which has symptoms very similar to periodontitis of the natural teeth, may develop after a dental implant operation is carried out. It is considered that this is caused because bacteria in the oral cavity intrude into a gap between the gingiva and the dental implant, a focus of infection (bacterial flora) is formed, and inflammation is caused thereby. There is a problem in that as the symptoms progress further, the jawbone which is in contact with the dental implant lyses, the jawbone surrounding the dental implant and supporting the dental implant disappears, and the dental implant falls out of the jawbone.

The related art proposes several forms of means of preventing the occurrence of peri-implantitis. For example, in Patent Literature 1, it is described that the surface of the dental implant is coated with lactoferrin effective in preventing bacteria from breeding and reducing bacteria-induced inflammation, or the implant is impregnated with the lactoferrin.

In addition, in Patent Literature 2, it is described that the screw shape of an implant fixture, which is a jawbone embedded portion of the dental implant, is devised to improve the adhesion properties of the dental implant with respect to the jawbone, and even when bacteria intrude into a gap between the gingiva and the dental implant, a deep part of the jawbone is prevented from being infected with the bacteria.

### Citation List

### Patent Literature

Patent Literature 1: Japanese Unexamined Patent Publication JP-A 2011-527205
Patent Literature 2: Japanese Unexamined Patent Publication JP-A 2010-188062

### Summary of Invention

### Technical Problem

The lactoferrin disclosed in Patent Literature 1 has properties of easily diffusing into the body. For this reason, the lactoferrin bonding to the dental implant gradually decreases and finally disappears as a time elapses. Accordingly, the technology disclosed in Patent Literature 1 has a problem in that it is not possible to maintain an action of preventing bacteria from breeding or an action of reducing inflammation over a long period. Since there is a possibility that the lactoferrin decreases the affinity between the dental implant and the jawbone, when the entirety of the dental implant is coated with the lactoferrin, the affinity between the jawbone embedded portion of the dental implant and the jawbone may be adversely affected, and bonding strength may decrease.

According to the technology disclosed in Patent Literature 2, the screw shape of the dental implant fixture is devised to prevent peri-implantitis, but in practice, the technology alone is difficult to prevent the jawbone from being infected with bacteria that intrude into a gap between the gingiva and the dental implant. That is, it cannot be said that the technology disclosed in Patent Literature 2 is sufficiently effective as peri-implantitis preventive means.

An object of the invention is to provide a dental implant that is excellent in preventing peri-implantitis which develops in the case where an operation is carried out to embed a dental implant in the jawbone, and that the affinity of a jawbone embedded portion embedded into the jawbone with the jawbone is not degraded.

### Solution to Problem

The invention provides a dental implant including a jawbone embedded portion that has affinity with respect to a jawbone; and a gingiva contacting portion inserted into a gingiva so as to be continuous with the jawbone embedded portion, at least a region of the gingiva contacting portion which is in contact with the gingival, being antibacterially treated so that an affinity of the jawbone embedded portion with the jawbone is not degraded, an arithmetic average roughness Ra of an outer surface of the region being set to 2 µm or less.

In the invention, it is preferable that an antibacterial treatment for the gingiva contacting portion is a coating treatment using an antibacterial material containing iodine or silver.

In the invention, it is preferable that the jawbone embedded portion and the gingiva contacting portion are individually manufactured, the jawbone embedded portion includes a first joining portion which is joined to the gingiva contacting portion and which is antibacterially treated, and the gingiva contacting portion includes a second joining portion which is joined to the first joining portion of the jawbone embedded portion and which is antibacterially treated.

In the invention, it is preferable that an arithmetic average roughness Ra of an outer surface of the jawbone embedded portion which is in contact with the jawbone is set to 2 µm or greater.

In the invention, it is preferable that an apatite coating treatment or an alkali heating treatment is applied to an outer surface of the jawbone embedded portion which is in contact with the jawbone.

### Advantageous Effects of Invention

According to the invention, in the dental implant having the jawbone embedded portion and the gingiva contacting portion, at least the region of the gingiva contacting portion which is in contact with the gingival, being antibacterially treated so that the affinity of the jawbone embedded portion with the jawbone is not degraded, and the arithmetic average roughness Ra of the region is set to 2 µm or less. Therefore, the region of the gingiva contacting portion has antibacterial properties, and becomes a smooth surface. Accordingly, since bacteria are less prone to attach to and stay in the region, and the region is prone to be in close contact with the gingiva, it is possible to prevent bacteria from intruding into a gap between the gingiva and the gingiva contacting portion, and even when bacteria intrude into the gap, it is possible to prevent the bacteria from breeding and moving to the jawbone.

In addition, since the antibacterial treatment for the gingiva contacting portion is carried out so that the affinity of the jawbone embedded portion with the jawbone is not degraded, bonding strength between the jawbone embedded portion and the jawbone does not deteriorate.

Further, according to the invention, since the antibacterial treatment for the gingiva contacting portion is a coating treatment using an antibacterial material containing iodine or silver, an antibacterial action is maintained over a long period, and the human body is not adversely affected thereby.

Furthermore, according to the invention, since the jawbone embedded portion and the gingiva contacting portion are individually manufactured, it is easy to apply different surface treatments to the jawbone embedded portion and the gingiva contacting portion, respectively. In addition, although there is a possibility that a gap into which bacteria are allowed to intrude is formed in a joining portion between the jawbone embedded portion and the gingiva contacting portion, in the invention, since the first joining portion of the jawbone embedded portion and the second joining portion of the gingiva contacting portion joined thereto is antibacterially treated, even when bacteria intrude into the joining portion therebetween, it is possible to prevent the bacteria from breeding.

Furthermore, according to the invention, since the arithmetic average roughness Ra of the outer surface of the jawbone embedded portion which is in contact with the jawbone is set to 2 µm or greater, it is possible to improve adhesion properties between the jawbone embedded portion and the jawbone and to increase the mechanical bonding strength therebetween.

Furthermore, according to the invention, since an apatite coating treatment or an alkali heating treatment is applied to the outer surface of the jawbone embedded portion which is in contact with the jawbone, it is possible to improve the affinity between the jawbone embedded portion and the jawbone and to increase the chemical bonding strength therebetween.

### Brief Description of Drawings

Other and further objects, features, and advantages of the invention will be more explicit from the following detailed description taken with reference to the drawings wherein:
FIG. 1 is a partial cross-sectional view exemplarily illustrating usage conditions of a dental implant 10 according to an embodiment of the invention;
FIG. 2 is a front view illustrating the dental implant 10 according to an embodiment of the invention in a state where a jawbone embedded portion 11 and a gingiva contacting portion 12 which are individually manufactured are separated from each other;
FIG. 3 is a front cross-sectional view illustrating the dental implant 10 according to an embodiment of the invention in a state where the jawbone embedded portion 11 and the gingiva contacting portion 12 which are individually manufactured, and a bolt 40 that connects the jawbone embedded portion 11 and the gingiva contacting portion 12 are separated from each other.
FIG. 4 is a front cross-sectional view illustrating the dental implant 10 according to an embodiment of the invention in a state where the jawbone embedded portion 11 and the gingiva contacting portion 12 which are individually manufactured are connected to each other using a bolt 40; and
FIG. 5 is a front view illustrating a dental implant 20 according to another embodiment of the invention in a case where a jawbone embedded portion 21 and a gingiva contacting portion 22 are integrally manufactured.

### Description of Embodiments

Hereinafter, preferred embodiments of the invention will be described in detail with reference to the accompanying drawings.

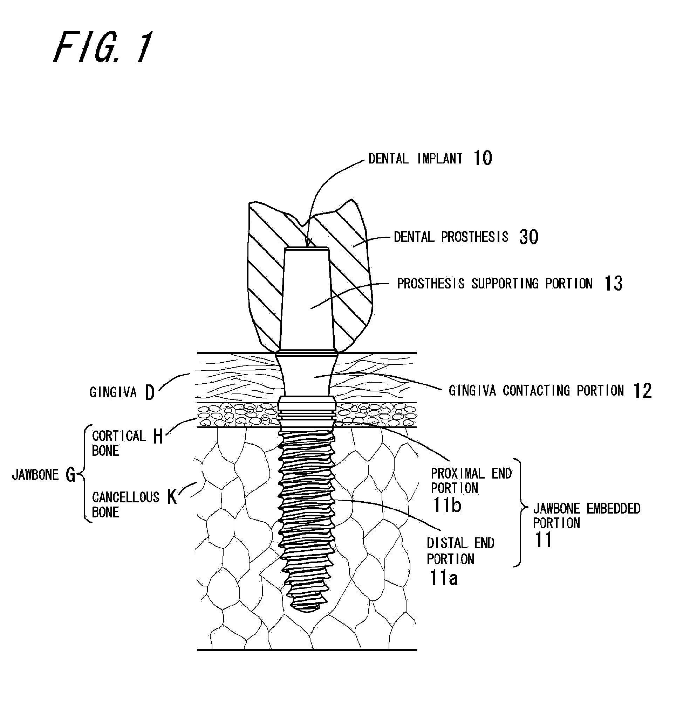

FIG. 1 is a partial cross-sectional view exemplarily illustrating usage conditions of a dental implant 10 according to an embodiment of the invention. As illustrated in FIG. 1, the dental implant 10 is used to fix a dental prosthesis 30 such as artificial teeth inside the oral cavity, and is made of a material, for example, titanium, titanium alloy, or ceramics, which has excellent affinity with the bone, and sufficient strength.

As illustrated in FIG. 1, the dental implant 10 of the embodiment has a jawbone embedded portion 11 that is embedded into a jawbone G and comes into contact with the jawbone G; a gingiva contacting portion 12 inserted into a gingiva D to be continuous with one end of the jawbone embedded portion 11; and a prosthesis supporting portion 13 on which the dental prosthesis 30 such as artificial teeth is mounted and which supports the dental prosthesis 30.

The jawbone embedded portion 11 includes a proximal end portion 11b that comes into contact with a cortical bone H which primarily forms a surface layer of the jawbone G when the jawbone embedded portion 11 is embedded into the jawbone G, and a distal end portion 11a that comes into contact with a cancellous bone K which primarily forms the inner part of the jawbone G. A male screw is formed on an outer circumferential surface of the distal end portion 11a in such a manner that the jawbone embedded portion 11 is firmly fixed to the jawbone G.

It is possible to integrally manufacture the jawbone embedded portion 11, the gingiva contacting portion 12, and the prosthesis supporting portion 13, but it is also possible to individually manufacture each of the portions and assemble each of the portions for use. It is possible to integrally manufacture the jawbone embedded portion 11 and the gingiva contacting portion 12 and assemble the individually manufactured prosthesis supporting portion 13 thereto, or depending on the situation, it is also possible to integrally manufacture the gingiva contacting portion 12 and the prosthesis supporting portion 13 and assemble the jawbone embedded portion 11 thereto.

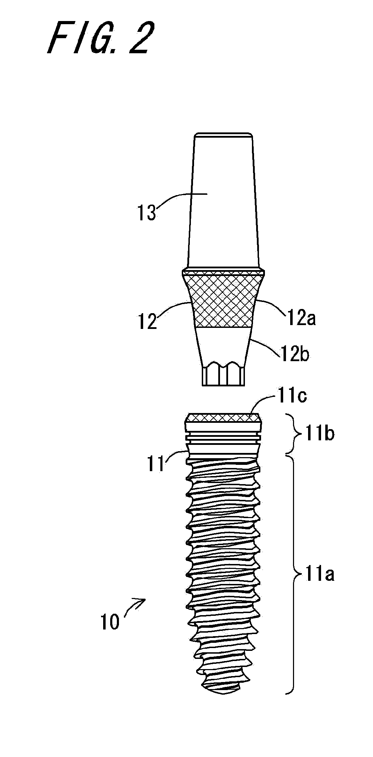

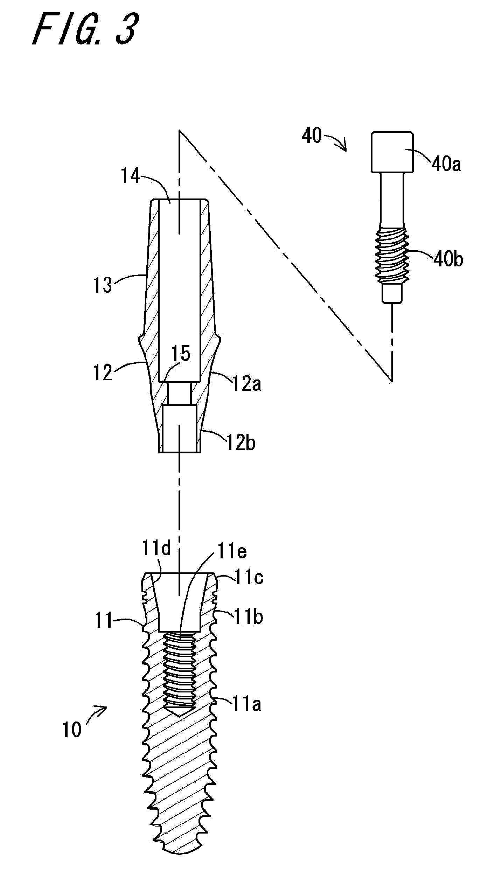

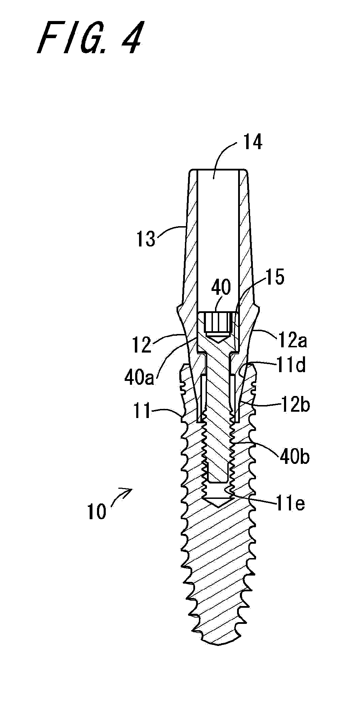

FIG. 2 is a front view illustrating the dental implant 10 according to an embodiment of the invention in a state where the jawbone embedded portion 11 and the gingiva contacting portion 12 which are individually manufactured are separated from each other. FIG. 3 is a front cross-sectional view illustrating the dental implant 10 according to an embodiment of the invention in a state where the jawbone embedded portion 11 and the gingiva contacting portion 12 which are individually manufactured, and a bolt 40 that connects the jawbone embedded portion 11 and the gingiva contacting portion 12 are separated from each other. FIG. 4 is a front cross-sectional view illustrating the dental implant 10 according to an embodiment of the invention in a state where the jawbone embedded portion 11 and the gingiva contacting portion 12 which are individually manufactured are connected to each other using the bolt 40.

As illustrated in FIG. 2, the dental implant 10 of the embodiment is configured so that the gingiva contacting portion 12 and the prosthesis supporting portion 13 are integrally manufactured, and the jawbone embedded portion 11 is assembled thereto. As illustrated in FIG. 3 and FIG. 4, the dental implant 10 with this configuration can adopt a structure in which the jawbone embedded portion 11 and the gingiva contacting portion 12 are connected to each other using the bolt 40 that passes through the insides of the gingiva contacting portion 12 and the prosthesis supporting portion 13.

That is, on a side of an end surface of the proximal end portion 11b of the jawbone embedded portion 11, there are formed a concave portion 11d serving as a first joining portion to which the gingiva contacting portion 12 is joined, and a female screw portion 11e into which a male screw portion 40b of the bolt 40 is screwed. In addition, as a second joining portion joined to the jawbone embedded portion 11, an inserting portion 12b fitted into the concave portion 11d of the jawbone embedded portion 11is disposed at one end of the gingiva contacting portion 12. Further, a through hole 14 through which the bolt 40 passes is formed in the gingiva contacting portion 12 and the prosthesis supporting portion 13 which are integrally manufactured, and a stepped portion 15 is disposed in the middle of the through hole 14 so as to allow the male screw portion 40b of the bolt 40 to pass through the stepped portion 15 but so as not to allow a head portion 40a of the bolt 40 to pass therethrough.

As illustrated in FIG. 4, the inserting portion 12b (second joining portion) of the gingiva contacting portion 12 is fitted to the concave portion 11d (first joining portion) of the jawbone embedded portion 11, the bolt 40 is inserted into the through hole 14 of the gingiva contacting portion 12 and the prosthesis supporting portion 13, and the male screw portion 40b is screwed into the female screw portion 11e of the jawbone embedded portion 11. Accordingly, the head portion 40a of the bolt 40 is engaged with the stepped portion 15 inside the through hole 14, and the inserting portion 12b of the gingiva contacting portion 12 is integrally connected to the concave portion 11d of the jawbone embedded portion 11 by bringing the inserting portion 12b into pressure-contact with the concave portion 11d.

According to the invention, in order to prevent the occurrence of peri-implantitis, at least a region 12a of the gingiva contacting portion 12 which is in contact with the gingiva D, is antibacterially treated, and the arithmetic average roughness Ra of an outer surface of the region 12a is 2 µm or less, and preferably 1 µm or less, and more preferably 0.5 µm or less. Here, the arithmetic average roughness Ra represents an arithmetic average roughness Ra defined in JIS B0601.

As with the dental implant 10 illustrated in FIG. 2, in the case where the jawbone embedded portion 11 and the gingiva contacting portion 12 are individually formed, and the gingiva contacting portion 12 and the prosthesis supporting portion 13 are integrally manufactured, it is not always necessary to apply an antibacterial treatment to portions not in contact with the gingiva D, for example, the inserting portion 12b to be fitted into the jawbone embedded portion 11, and the prosthesis supporting portion 13 on which the dental prosthesis 30 (refer to FIG. 1) is mounted, and it is not necessary to restrict the surface roughness of the portions.

In principle, the jawbone embedded portion 11 is not antibacterially treated so that the affinity of the jawbone embedded portion 11 with the jawbone G is not degraded. However, a portion having a possibility of coming into contact with the gingiva D in the boundary between the jawbone G and the gingiva D, such as an end edge portion 11c of the jawbone embedded portion 11 illustrated in FIG. 2 may be antibacterially treated.

As the type of an antibacterial treatment to be applied to the gingiva contacting portion 12, such technical solution that the antibacterial treatment maintains an antibacterial action over a long period and does not adversely affect the human body is selected. Specifically, it is preferable that the gingiva contacting portion 12 is coated with or is impregnated with iodine or an iodine compound, or silver or a silver compound.

A method of applying an antibacterial treatment using iodine or an iodine compound is described in, for example, Japanese Examined Patent Publication JP-B2 2932437 (hereinafter, referred to as Reference Literature 1), and it is considered that this method may be used in the embodiment. That is, based on the description of Reference Literature 1, it is possible to form an oxide film by applying an anodic oxidation treatment, an etching dissolving treatment, a cation oxidation treatment, an anion reduction treatment, and so on to the surface of a base material having titanium as a main constituent, and impregnate iodine or an iodine compound into micropores or micro concavities and convexities of the oxide film using electrophoresis.

For example, a method of applying an antibacterial treatment using silver or a silver compound is described in, for example, US 2011/0272276 A1 (hereinafter, referred to as Reference Literature 2) and a paper entitled "Antimicrobial titanium/silver PVD coating on titanium", published on BioMedical Engineering OnLine 2006.5.22, and it is considered that this method may be used in the embodiment. That is, based on the description of Reference Literature 2, it is possible to prevent the efflux of silver and to maintain the antibacterial action of silver over a long period by forming an anodic film containing silver via the application of the anodic treatment to the dental implant 10, and then forming a cathodic film containing gold or the like via the application of the cathodic treatment. Alternatively, based on the description of Reference Literature 3, it is possible to exert antibacterial action by forming a silver titanium alloy film on the surface of a titanium member using a PVD method (physical vapor deposition method).

The above-mentioned antibacterial treatment methods are simply given as examples, and it is possible to adopt other antibacterial treatment methods using iodine, an iodine compound, silver, or a silver compound. In addition, antibacterial materials other than iodine, an iodine compound, silver, or a silver compound may be used.

As the technical solution for setting the arithmetic average roughness Ra of the outer surface of the region 12a of the gingiva contacting portion 12 which is in contact with the gingiva D to 2 µm or less, it is considered that a physical treatment such as grinding is applied to the region 12a, or the surface roughness is adjusted by applying an appropriate coating to the region 12a. In addition, it is possible to adjust the surface roughness of the region 12a to a desired value or less with the application of an antibacterial treatment performed in the invention.

In the dental implant 10 according to the embodiment illustrated in FIG. 1 to FIG. 4, the jawbone embedded portion 11 and the gingiva contacting portion 12 are individually manufactured, and thus it is easy to apply different treatments to the jawbone embedded portion 11 and the gingiva contacting portion 12, respectively.

In the case of the dental implant 10 having a structure in which the jawbone embedded portion 11 and the gingiva contacting portion 12 are connected to each other, a joining portion between the jawbone embedded portion 11 and the gingiva contacting portion 12 is designed not to have as large a gap as possible, however, it is very difficult to completely prevent the intrusion of bacteria into the joining portion.

In the embodiment, each of the surface of the first joining portion of the jawbone embedded portion 11 and the surface of the second joining portion of the gingiva contacting portion 12 is antibacterially treated, and therefore even when bacteria intrude into the joining portion, it is possible to prevent the bacteria from breeding. Specifically, in FIG. 3, an inner surface of the concave portion 11d of the jawbone embedded portion 11, and an outer surface of the inserting portion 12b of the gingiva contacting portion 12 are antibacterally treated.

As in the embodiment, in the case where the gingiva contacting portion 12 and the prosthesis supporting portion 13 are integrally manufactured and the jawbone embedded portion 11 is individually manufactured, the entirety of the gingiva contacting portion 12 and the prosthesis supporting portion 13 may be antibacterially treated. In the case where the gingiva contacting portion 12 and the prosthesis supporting portion 13 are individually manufactured, the prosthesis supporting portion 13 may be antibacterially treated in the same method as that of the gingiva contacting portion 12.

As necessary, it is possible to adopt publicly-known technical solution in the related art for improving the bonding strength of the jawbone embedded portion 11 with the jawbone G. For example, an outer surface of the jawbone embedded portion 11 which is in contact with the jawbone G, may undergo a treatment of setting the arithmetic average roughness Ra of the outer surface to 2 µm or greater, an apatite coating treatment, or an alkali heating treatment.

When the arithmetic average roughness Ra of the outer surface of the jawbone embedded portion 11 is set to 2 µm or greater, it is possible to exert good adhesion properties of the jawbone embedded portion 11 with the jawbone G, and obtain high physical bonding strength therebetween. As the technical solution for setting the arithmetic average roughness Ra to 2 µm or greater, a mechanical roughness treatment such as sandblasting, a chemical roughness treatment via chemicals and so on are considered.

When an apatite coating treatment or an alkali heating treatment is applied to the outer surface of the jawbone embedded portion 11, it is possible to improve the affinity of the jawbone embedded portion 11 with the jawbone G, and obtain good chemical bonding strength therebetween. A method of applying an apatite coating treatment or an alkali heating treatment is described in, for example, Japanese Examined Patent Publication JP-B2 2775523 (hereinafter, referred to as Reference Literature 4), and it is considered that this method is used in the embodiment. That is, based on the description of Reference Literature 4, by dipping a base body made of titanium or titanium alloy in an alkali solution, and then heating the dipped base body to a titanium transition temperature or greater, it is possible to form a film composed of a titanium oxide phase and an amorphous alkali titanate phase having excellent affinity with the bone, on the surface of the base body.

By further dipping the base body on the surface of which the film composed of the titanium oxide phase and the amorphous alkali titanate phase is formed through the above-mentioned treatment, in a water solution containing calcium or phosphorus of which the content is equal to or exceeding the solubility of apatite, it is possible precipitate and form an apatite layer excellent in affinity with the bone, on the surface of the base body.

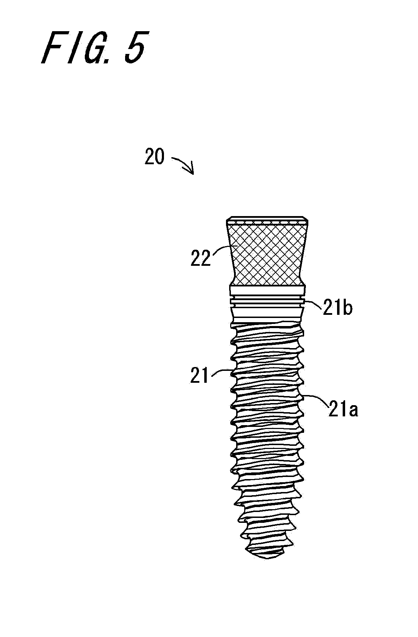

FIG. 5 is a front view illustrating a dental implant 20 according to another embodiment of the invention in a case where a jawbone embedded portion 21 and a gingiva contacting portion 22 are integrally manufactured. As illustrated in FIG. 5, a structure in which the jawbone embedded portion 21 includes a distal end portion 21a that comes into contact mainly with the cancellous bone K and a proximal end portion 21b that comes into contact mainly with the cortical bone H, and a male screw is formed on an outer surface of the distal end portion 21a is common to the embodiment illustrated in FIG. 1 to FIG. 4. In this embodiment, a prosthesis supporting portion (not illustrated) is individually manufactured, and is connected to the gingiva contacting portion 22 for use.

In the embodiment, only the gingiva contacting portion 22 is antibacterially treated, and the jawbone embedded portion 21 is not antibacterially treated. As necessary, an outer surface of the jawbone embedded portion 21 which is in contact with the jawbone G, undergoes a treatment of setting the arithmetic average roughness Ra of the outer surface to 2 µm or greater, an apatite coating treatment, or an alkali heating treatment. Further, it is possible to apply an antibacterial treatment to a joining portion between the gingiva contacting portion 22 and the prosthesis supporting portion (not illustrated).

Since the dental implant 20 of the embodiment has no gap between the jawbone embedded portion 21 and the gingiva contacting portion 22, there is an advantageous effect that a focus of infection is less prone to be formed and peri-implantitis is less prone to develop.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Reference Signs List

10: Dental implant
11: Jawbone embedded portion
12: Gingiva contacting portion
12a: Region which is in contact with gingiva
12b: Inserting portion
13: Prosthesis supporting portion
20: Dental implant
21: Jawbone embedded portion
22: Gingiva contacting portion
30: Dental prosthesis
40: Bolt
D: Gingiva
G: Jawbone

## Claims

1. A dental implant, comprising:
a jawbone embedded portion that has affinity with a jawbone; and
a gingiva contacting portion inserted into gingiva so as to be continuous with the jawbone embedded portion, at least a region of the gingiva contacting portion which is in contact with the gingival, being antibacterially treated so that an affinity of the jawbone embedded portion with the jawbone is not degraded, an arithmetic average roughness Ra of an outer surface of the region being set to 2 µm or less.

2. The dental implant according to claim 1,
wherein an antibacterial treatment for the gingiva contacting portion is a coating treatment using an antibacterial material containing iodine or silver.

3. The dental implant according to claim 1 or 2,
wherein the jawbone embedded portion and the gingiva contacting portion are individually manufactured,
the jawbone embedded portion includes a first joining portion which is joined to the gingiva contacting portion and which is antibacterially treated, and
the gingiva contacting portion includes a second joining portion which is joined to the first joining portion of the jawbone embedded portion and which is antibacterially treated.

4. The dental implant according to any one of claims 1 to 3,
wherein the arithmetic average roughness Ra of an outer surface of the jawbone embedded portion which is in contact with the jawbone is set to 2 µm or greater.

5. The dental implant according to any one of claims 1 to 4,
wherein an apatite coating treatment or an alkali heating treatment is applied to an outer surface of the jawbone embedded portion which is in contact with the jawbone.
